# EUROPEAN PATENT APPLICATION

(11) **EP 1 675 318 A1**
(43) Date of publication of application: **28.06.2006**
(21) Application number: 04773001.5
(22) Date of filing: 13.09.2004
(51) Int. Cl.: H04L 12/56

(54) **MEDIA STREAM MULTICAST DISTRIBUTION METHOD AND APPARATUS**

(30) Priority: 12.09.2003 JP 2003322190; 03.06.2004 JP 2004165892
(71) Applicant: NEC CORPORATION, Minato-ku, Tokyo 108-8001 (JP)
(72) Inventor: DEI, Hiroaki, NEC Corporation, Tokyo 1088001 (JP)
(74) Representative: Wenzel & Kalkoff
(86) International application number: PCT/JP2004/013319
(87) International publication number: WO 2005/027439

(57) **Abstract**

A media stream transmission apparatus for transmitting a plurality of media streams comprises a packet assembler for coupling a plurality of information units for transmitting the respective media streams into a single packet, and a multicast packet transmitter for multicasting the packet. A media stream reception apparatus is connected to the media stream transmission apparatus through a network having a multicast-capable router, and comprises a multicast packet receiver for receiving a multicast packet, an information element extractor for extracting one or plural information elements to be reproduced from the received packet, and a reproduction unit for reproducing the extracted information element or elements.

## Description

### TECHNICAL FIELD:

The present invention relates to a method of and an apparatus for delivering a multimedia stream by multicasting, and more particularly to a method of and an apparatus for reducing an increase in the loads on distribution servers and en route nodes and links even when a number of multimedia streams are distributed to a number of recipients.

### BACKGROUND ART:

In recent years, there has been a rapid growth of the distribution of multimedia streams over a broadband network for the delivery of movies, the live coverage of sport matches and concerts, etc. The so-called "last one mile problem" is being solved by the widespread use of ADSL (Asynchronous Digital Subscriber Lines) and optical fibers which are connected to viewers' homes, further promoting the tendency to increase the distribution of multimedia streams. As the distribution of multimedia streams increases, the loads on distribution servers and networks for providing services are increasing to put growing burdens on program providers for investments in facilities for extensive distributions. In order to increase the number of programs to be distributed as media streams and also to increase the number of recipients of services, it will be necessary to distribute media streams efficiently.

According to the most basic process of distributing media streams, the sender assembles the information of a required media stream for each recipient and sends the assembled information as unicast packets to the recipient, and the recipient receives the unicast packets and reproduces the media stream from the received unicast packets. This process is effective if the sender and the network have a sufficient capability for the number of types of media streams to be provided and the number of recipients who simultaneously receive media streams.

However, if the number of types of media streams to be provided and the number of recipients who simultaneously receive media streams increase, then the burdens on the sender and the network for distributing media streams increase proportionately. As a result, a limitation is posed on the number of types of media streams to be provided and the number of recipients who simultaneously receive media streams.

In an attempt to solve the above problems, Japanese Patent Laid-open Application No. 2000-118841 (JP P2000-118841A) discloses a technology for assigning a multicast address to each program and multicasting the program to recipients who view the same program.

According to the conventional media stream distribution technology described above, it is necessary to generate packets for each program viewer, or for each of several media streams having different compression processes or different compression ratios, or for each combination of such media streams. Therefore, if the number of programs increases, or if the same program is received at different times by recipients, or if media streams having different compression processes or different compression ratios need to be distributed depending on recipients terminals, then growing burdens are posed on the distributing server. Since generated packets are relayed over the network, the loads on nodes on routes over the network are also increased. Furthermore, because there is a plurality of packets of identical contents and headers are allocated to respective packets, the required bandwidth is increased, and the loads on links on routes over the network are also increased. If complete data need to be received, then in the event of a data error or lack in the media stream while it is being sent over a transmission path, the data must be retransmitted. The required bandwidth is further increased in view of the retransmission of the data.

According to the conventional distribution of media streams, as the number of programs and the number of media stream receivers increase, it is necessary to install a number of media stream transmitters, employ high-performance routers on the network, and employ high-speed links between routers and apparatus.

### DISCLOSURE OF THE INVENTION:

### PROBLEM TO BE SOLVED BY THE INVENTION:

It is an object of the present invention to provide a method of efficiently delivering a plurality of programs and media streams by multicasting.

Another object of the present invention is to provide an apparatus for efficiently delivering a plurality of programs and media streams by multicasting.

### MEANS FOR SOLVING THE PROBLEM:

According to the present invention, a media stream transmission method for transmitting a plurality of media streams comprises the steps of coupling a plurality of information units for transmitting the respective media streams into a single packet, and multicasting the packet.

According to the present invention, a media stream reception method for receiving a media stream comprises the steps of receiving a packet which has been delivered by multicasting, extracting one or plural information elements to be reproduced from the received packet, and reproducing the extracted information element or elements.

According to the present invention, a media stream transmission apparatus for transmitting a plurality of media streams comprises means for coupling a plurality of information units for transmitting the respective media streams into a single packet, and means for multicasting the packet by multicasting.

According to the present invention, a media stream reception apparatus for receiving a media stream comprises means for receiving a packet which has been delivered by multicasting, means for extracting one or plural information elements to be reproduced from the received packet, and means for reproducing the extracted information element or elements.

According to the present invention, a media stream distributing method comprises the steps of transmitting a multicast packet by the media stream transmission method according to the present invention, distributing the multicast packet over a network having a multicasting function, and receiving the multicast packet by a media stream reception method according to present invention.

According to the present invention, a media stream distribution system comprises a media stream transmission apparatus according to the present invention, a media stream reception apparatus according to the present invention, and a network comprising at least one multicast-capable router.

According to the present invention, the media stream transmission apparatus does not need to edit packets destined for respective terminals, but may edit only one packet. Stated otherwise, it is not required to edit packets differently depending on the number of media stream reception apparatus and a combination of programs and mediums to be viewed at the terminals, the load on the apparatus for transmitting a media stream is reduced when a plurality of programs, or a combination of media streams from one program, or media streams encoded by different encoding processes are distributed to a number of recipients.

According to the present invention, furthermore, the number of received packets and the number of packets to be transferred to a router at a next hop are reduced, and the number of packets to be processed per unit time, which is a dominant factor for determining the limitation on the processing capability of a router, is reduced. Therefore, the load on each of several intermediate apparatuses such as routers of a network is reduced. According to the present invention, since the total number of packet headers is reduced, and there is no need to generate and transmit a plurality of packets including identical information units for recipients, the loads on links between the apparatus and routers and also between routers are reduced.

### BRIEF DESCRIPTION OF THE DRAWINGS:

Fig. 1A is a block diagram illustrating an arrangement of a media stream distribution system according to a first embodiment of the present invention;
Fig. 1 B is a diagram showing a configuration of a multicast packet by way of example;
Fig. 2 is a block diagram of an arrangement for encoding the same contents according to different encoding processes;
Fig. 3 is a block diagram of an arrangement for distributing the same contents with a time difference;
Fig. 4A is a block diagram of a media stream distribution system having ciphering units;
Fig. 4B is a diagram showing a configuration of a multicast packet by way of example;
Fig. 5 is a block diagram showing a process for determining various parameters that need to be matched between a transmission apparatus and a reception apparatus;
Fig. 6A is a diagram showing a format of a multicast packet by way of example;
Fig. 6B is a diagram showing a format of a multicast packet by way of example;
Fig. 6C is a diagram showing a format of a multicast packet by way of example;
Fig. 6D is a diagram showing a format of a multicast packet by way of example;
Fig. 6E is a diagram showing a format of a multicast packet by way of example;
Fig. 7A is a block diagram illustrating an arrangement of a media stream distribution system having a error correcting function;
Fig. 7B is a diagram showing a configuration of a multicast packet by way of example; and
Fig. 8 is a block diagram showing a process for determining various parameters that need to be matched between a transmission apparatus and a reception apparatus.

### BEST MODE FOR CARRYING OUT THE INVENTION:

"Media stream" used herein refers to a unit as a basis for distribution, comprising one or plural media, to be encoded by the same encoding means for transmitting a series of definite expressions. For example, a media stream is a unit of information encoded from a series of images and sounds by a certain encoding process. For example, moving pictures of movies, sounds of movies, sounds of concerts, and moving pictures of concerts represent media streams. If one moving picture is encoded by different encoding processes, then different media streams are generated therefrom.

"Information unit" refers to an element making up a portion of one media stream, and serves as a unit to be processed or transmitted. A plurality of information units may be lumped into a new information unit. For example, PCM (Pulse Code Modulation) data of sound sampled over constant cycles and a sound packet made up of a certain number of samples of such data represent information units. A compressed unit of such PCM data and sound packet, and a lump of such compressed units are also referred to as information units. One frame of an image, differential information of adjacent frames of an image, and a collection of such frames or information or a portion of such a frame or information represent information units. An information unit may contain information required for reproduction and transmission control and a data length thereof.

"Program" refers to a unit as a basis for distribution services, and is made up of one or plural media streams. For example, one movie program comprises a media stream of moving pictures and a media stream of sounds which are paired. If a movie is made up of a media stream of moving pictures and two media streams of sounds in two languages, then a program is represented by a combination of the media stream of moving pictures and the media stream in one language. However, it is possible to combine the media stream of moving pictures and a plurality of the media streams of sounds into one program for language study.

### <<First Embodiment>>

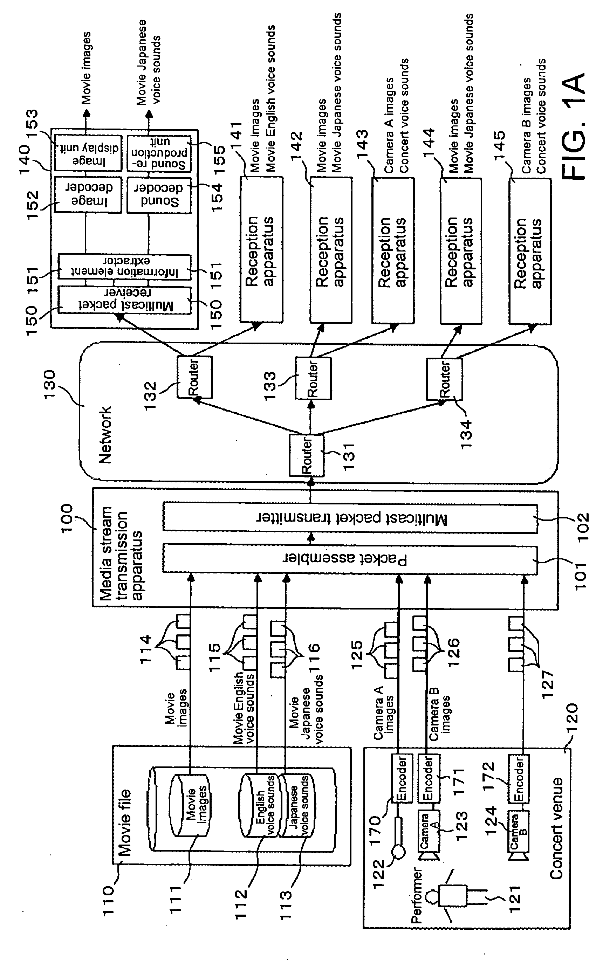

Fig. 1A shows a media stream distribution system according to a first embodiment of the present invention. The distribution system comprises media stream transmission apparatus 100, media stream reception apparatuses 140 to 145, and network 130 interconnecting media stream transmission apparatus 100 and media stream reception apparatuses 140 to 145. Multicast-capable routers 131 to 134 are disposed inside network 130. Media stream transmission apparatus 100 is connected to router 131, media stream reception apparatuses 140, 141 to router 132, media stream reception apparatuses 142, 143 to router 133, media stream reception apparatuses 144, 145 to router 133, and router 131 to routers 132 to 134.

Media stream transmission apparatus 100 serves to combine various media streams into a single packet and deliver the packet to network 130 by multicasting. Media stream transmission apparatus 100 has packet assembler 101 for assembling a plurality of information units 114 to 116, 125 to 127, which transfer the respective media streams, into a single packet, and multicast packet transmitter 102 for multicasting the packet assembled by packet assembler 101 to network 130. Packet assembler 101 may add to the packet at least one of information identifying a program to which an information unit belongs, the type of the medium of a media stream to which an information unit belongs, and encoding information of a media stream to which an information unit belongs. The arrangement used for multicasting may be known to those skilled in the art.

According to the present embodiment, a plurality of information units are at least one of (a) a plurality of information units which are different from each other that serve as components of different media streams making up a single program, (b) a plurality of information units which are different from each other that serve as components of different media streams making up different programs, (c) a plurality of information units which are different from each other that serve as components of media streams of different medium types, (d) a plurality of information units which are different from each other that represent the same contents which are encoded by respective different encoding processes, (e) a plurality of information units which are different from each other that represent the same contents which are encoded at a plurality of different compression ratios by the same encoding process, (f) a plurality of information units which are different from each other that are distributed with a time difference, (g) a plurality of information units which are different from each other that are ciphered differently, and (h) a plurality of information units which are different from each other that represent different contents which are ciphered identically. The method used for constructing information units may be known to those skilled in the art.

Media stream reception apparatus 140 comprises multicast packet receiver 150 for receiving a packet delivered by multicasting, information element extractor 151 for extracting one or plural information elements to be reproduced from the received packet, image decoder 152 for decoding an information element corresponding to an image of the extracted information element or elements, image display unit 153 for displaying the image depending on the decoded information element of the image, sound decoder 154 for decoding an information element corresponding to a sound of the extracted information element or elements, and sound reproduction unit 155 for reproducing the sound depending on the decoded information element of the sound. Stated otherwise, an information element or elements extracted by information element extractor 151 are reproduced by image decoder 152, image display unit 153, sound decoder 154, and sound reproduction unit 155. Multicast packet receiver 150 also receives at least one of information identifying a program to which an information unit belongs, the type of the medium of a media stream to which an information unit belongs, and encoding information of a media stream to which an information unit belongs. Based on the received information, image decoder 152, image display unit 153, sound decoder 154, and sound reproduction unit 155 reproduce an information element or elements. Media stream reception apparatus 141 to 145 are identical in structure to media stream reception apparatus 140, and each has the multicast packet receiver, the information element extractor, the image decoder, the image display unit, the sound decoder, and the sound reproduction unit.

In the illustrated example, media stream transmission apparatus 100 is provided with a movie program from movie file 110, and also provided with a live concert program from concert venue 120. Movie file 110 contains movie images 111, movie English voice sounds 112, and movie Japanese voice sounds 113. Movie images 111 input movie image information units 114 to packet assembler 101. Movie English voice sounds 112 input movie English voice sound information units 115 to packet assembler 101. Movie Japanese voice sounds 112 input movie Japanese voice sound information units 116 to packet assembler 101. Concert venue 120 has microphone 122 for picking up voice sounds from performer 201, and camera A 123 and camera B 124 for capturing pictures of performer 201. Voice sounds picked up by microphone 122 are encoded by encoder 170 into concert voice sound information units 125, which are input to packet assembler 101. Images captured by camera A 123 and camera B 124 are encoded by respective encoders 171, 172 into camera A image information units 126 and camera B image information units 127, respectively, which are input to packet assembler 101. Of media stream reception apparatuses 140 to 145 that receive media streams from media stream transmission apparatus 100, media stream reception apparatuses 140, 142, 144 allow movie images 111 and movie Japanese voice sounds 113 to be viewed, media stream reception apparatus 141 allows movie images 111 and movie English voice sounds 112 to be viewed, media stream reception apparatus 143 allows concert sounds picked up by microphone 122 and concert images captured by camera A 123 to be viewed, and media stream reception apparatus 145 allows concert sounds picked up by microphone 122 and concert images captured by camera B 124 to be viewed.

The distribution of media streams by the system will be described below.

In the media stream distribution system, movie file 110 sends information of movie images 111, Japanese voice sounds 112, and Japanese voice sounds 113 respectively as movie image information units 114, movie English voice sound information units 115, and movie Japanese voice sound information units 116 periodically to media stream transmission apparatus 100. Similarly, voice sounds picked up by microphone 122, images captured by camera A 123, and images captured by camera B 124 are encoded into concert voice sound information units 125, camera A image information units 126, and camera B image information units 127, respectively, which are sent from concert venue 120 periodically to media stream transmission apparatus 100.

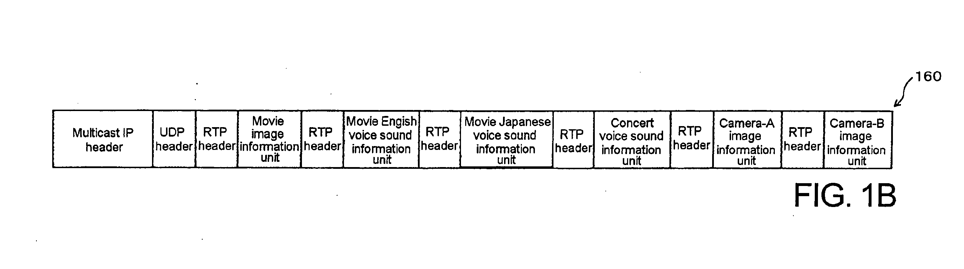

In media stream transmission apparatus 100, movie image information unit 114, movie English voice sound information unit 115, movie Japanese voice sound information unit 116, concert voice sound information unit 125, camera A image information unit 126, and camera B image information unit 127, which are periodically sent or read from the file, are assembled by packet assembler 101 into a single UDP (User Datagram Protocol) packet with an RTP (Real time Transport Protocol) header assigned to each information unit. The UDP packet is then sent as multicast packet 160 to router 131 of network 130 by multicast packet transmitter 102. An example of the format of this multicast packet is multicast packet 160 shown in Fig. 1 B. If network 130 is assumed to be the Internet, then since the IP (Internet Protocol) is used in the Internet, multicast packet 160 begins with a multicast IP header and has a UDP header following the multicast IP header. After the UDP header, multicast packet 160 also has successive information units each preceded by an RTP header.

Router 131 sends multicast packet 160 to router 132, router 133, and router 134 based on preset multicasting routing. Router 132 sends multicast packet 160 to media stream reception apparatuses 140, 141, router 133 to media stream reception apparatuses 142, 143, and router 134 to media stream reception apparatuses 144, 145.

In media stream reception apparatus 140, multicast packet receiver 150 receives multicast packet 160, and information element extractor 151 extracts movie image information unit 114 and movie Japanese voice sound information unit 116 which are media streams to be reproduced. Image decoder 152 and image display unit 153 reproduce movie image information unit 114, and sound decoder 154 and sound reproduction unit 155 reproduce movie Japanese voice sound information unit 116.

By periodically repeating the above process, movie images 111 and movie Japanese voice sounds 113 from movie file 110 can be viewed on media stream reception apparatus 140.

Similarly, media stream reception apparatuses 142, 144 reproduce movie images 111 and movie Japanese voice sounds 113 from movie file 110, media stream reception apparatus 141 reproduces movie images 111 and movie English voice sounds 112 from movie file 110, media stream reception apparatus 143 reproduces the image from camera A 123 and the sound from microphone 122, and media stream reception apparatus 145 reproduces the image from camera B 124 and the sound from microphone 122.

If a packet sent from media stream transmission apparatus 100 contains at least one of information identifying a program to which an information unit belongs, the type of the medium of a media stream to which an information unit belongs, and encoding information of a media stream to which an information unit belongs, then multicast packet receiver 150 receives the information, and controls the reproduction of information elements in image decoder 152, image display unit 153, sound decoder 154, and sound reproduction unit 155 based on the received information.

In the present embodiment, one multicast packet includes information units of a plurality of media streams representing components of a plurality of programs, and the packet is delivered by multicasting over network 130 to media stream reception apparatuses 140 to 145. Each of the media stream reception apparatuses extracts only a portion of the packet which it is to reproduce and reproduces the extracted portion.

The present embodiment as compared with the conventional systems offers the following advantages:

First, media stream transmission apparatus 100 does not need to edit packets destined for respective terminals, but may edit only one packet. Since media stream transmission apparatus 100 is not required to edit packets differently depending on the number of media stream reception apparatus and a combination of programs and mediums to be viewed at the terminals, the load on media stream transmission apparatus 100 is reduced.

Secondly, router 131 receives a reduced number of packets and transfers a reduced number of packets to routers 132 to 134, and the number of packets to be processed per unit time, which is a dominant factor for determining the limitation on the processing capability of a router, is reduced. Therefore, the load on router 131 is reduced.

Thirdly, routers 132 to 134 receive a reduced number of packets, and may send only one multicast packet if they are connected to the media stream reception apparatus through a general shared LAN. Therefore, the number of packets to be sent is reduced, and the loads on routers 132 to 134 are reduced.

Fourthly, the total number of packet headers of packets that pass through links between media stream transmission apparatus 100 and router 131 and also between the routers is reduced, so that the loads on the links are reduced.

Fifthly, according to the conventional technology, depending on a combination of media streams to be viewed by recipients, information units of the same media stream appear in a plurality of different packets. According to the present embodiment, the same media stream appears only in one multicast packet. Therefore, the loads on the links are further reduced.

According to the present embodiment, it has been described that voice sounds of movies are expressed in two languages, English and Japanese. However, the two languages are not limited to such a combination. The present invention is also applicable to movie files containing voice sounds in three or more languages.

### <<Second Embodiment>>

A media stream distribution system according to a second embodiment of the present invention for distributing one program as differently encoded media streams or allowing recipients to select types of media streams will be described below.

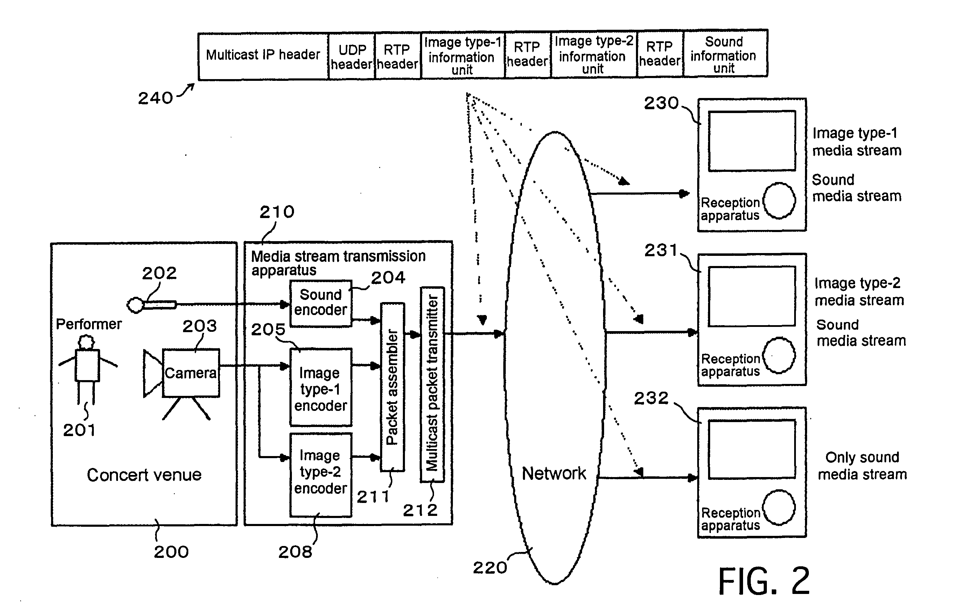

As shown in Fig. 2, the media stream distribution system according to the second embodiment serves to distribute a live concert program from concert venue 200 from media stream transmission apparatus 210 over network 220 to a plurality of media stream reception apparatuses230 to 232. The media stream distribution system employs different encoding processes with respect to media stream reception apparatuses 230 to 232, respectively. Network 220 is identical to network 130 shown in Fig. 1.

Concert venue 200 has microphone 202 for picking up voice sounds from performer 201, and camera 203 for capturing pictures of performer 201. Media stream transmission apparatus 210 comprises sound encoder 204 for encoding voice sounds picked up by microphone 202, image type-1 encoder 205 and image type-2 encoder 206 for encoding images captured by camera 203, packet assembler 211 which is identical to packet assembler 101 in the system shown in Fig. 1, and multicast packet transmitter 212 which is identical to multicast packet transmitter 102 in the system shown in Fig. 1. Image type-1 encoder 205 and image type-2 encoder 206 encode images according to image sizes, aspect ratios, color counts, compression processes, and compression ratios which are partly or wholly different from each other, and produce encoded image type-1 and encoded image type-2, respectively. Concert voice sound information units from sound encoder 204, image type-1 information units from image type-1 encoder 205, and image type-2 information units from image type-2 encoder 206 are supplied to packet assembler 211.

Media stream reception apparatuses 230 to 232 are identical in structure to media stream reception apparatuses 141 to 145 in the system shown in Fig. 1. According to the present embodiment, however, different encoding processes are used for viewing the same image with respect to the respective media stream reception apparatus. Media stream reception apparatus 230 allows images encoded according to the image type-1 and sounds to be viewed, and media stream reception apparatus 231 allows images encoded according to the image type 2 and sounds to be viewed. Media stream reception apparatus 232 allows only sounds to be heard.

The distribution of media streams by the system will be described below.

In the media stream distribution system, when voice sounds picked up by microphone 202 and an image captured by camera 203 are input to media stream transmission apparatus 210, sound encoder 204 encodes the voice sounds into a voice sound information unit and image type-1 encoder 205 and image type-2 encoder 206 encode the image into an image type-1 information unit and an image type-2 information unit, respectively, in media stream transmission apparatus 210. Packet assembler 211 edits the voice sound information unit, the image type-1 information unit and the image type-2 information unit into the format of multicast packet 240. Multicast packet transmitter 212 multicasts multicast packet 240 over network 220. Multicast packet 240 begins with a multicast IP header and has a UDP header following the multicast IP header. After the UDP header, multicast packet 240 also has successive information units each preceded by an RTP header.

Network 220 relays multicast packet 240 to media stream reception apparatuses 230 to 232. As a result, media stream reception apparatus 230 extracts only the image type-1 information unit and the voice sound information unit from received multicast packet 240 and reproduces them, and media stream reception apparatus 231 extracts only the image type-2 information unit and the voice sound information unit from received multicast packet 240 and reproduces them. Media stream reception apparatus 232 extracts only the voice sound information unit from received multicast packet 240 and reproduces it.

According to the conventional technology, in order for a plurality of media stream reception apparatuses to extract different media streams and their combination, it is necessary to generate and distribute packets depending on the respective reception apparatus. According to the present embodiment, however, the image type-1 information element, the image type-1 information element, and the voice sound information element are lumped into one packet, and the packet is multicast. The media stream reception apparatuses extract desired information elements from the multicast packet and reproduce them. According to the present embodiment, therefore, the object can be achieved by generating and distributing a single multicast packet. The user is thus capable of viewing programs based on a combination of whether there is an image or not, an image quality, and an image size, the combination being selected by the user depending on the capability of the media stream reception apparatus and the difference between prices for program distributions.

### <<Third Embodiment>>

A media stream distribution system according to a third embodiment of the present invention for distributing one media stream with a time difference to allow viewers to view the media stream from the beginning, rather than some time in the media stream, even if the viewers start viewing the media stream at different times, will be described below.

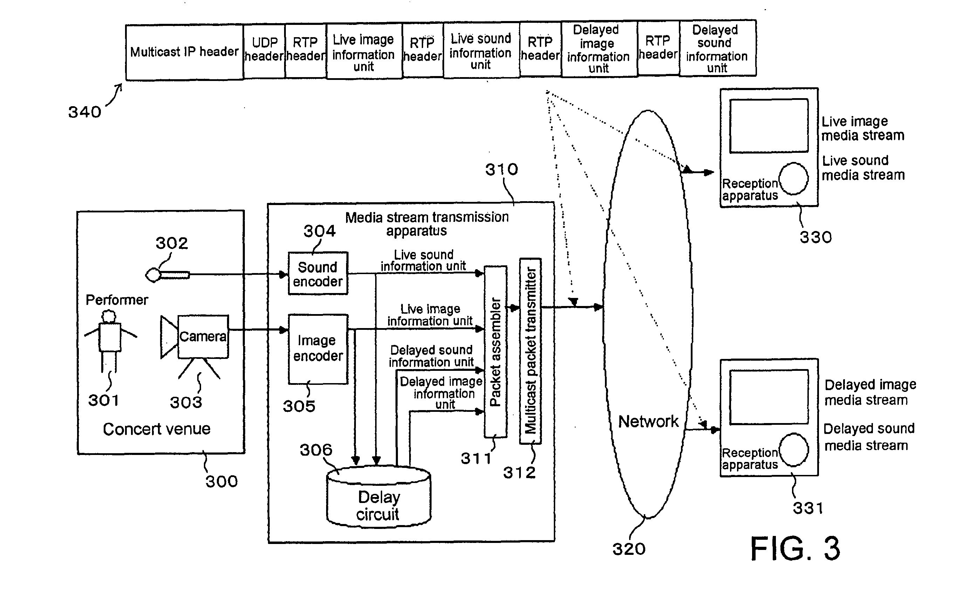

As shown in Fig. 3, the media stream distribution system according to the third embodiment serves to distribute a live concert program from concert venue 300 from media stream transmission apparatus 310 over network 320 to a plurality of media stream reception apparatuses 330, 331. The media stream distribution system distributes live sounds and images of the concert to media stream reception apparatus 330, and distributes sounds and images of the concert with a certain time lag to media stream reception apparatus 331. Network 320 is identical to network 130 shown in Fig. 1.

Concert venue 300 has microphone 302 for picking up voice sounds from performer 301, and camera 303 for capturing pictures of performer 301. Media stream transmission apparatus 310 comprises sound encoder 304 for encoding voice sounds picked up by microphone 302 into live voice sound information units, image encoder 305 for encoding images captured by camera 303 into live image information units, delay circuit 306 for delaying the live voice sound information units and the live image information units to generate delayed voice sound information units and delayed image information units, respectively, packet assembler 311 which is identical to packet assembler 101 in the system shown in Fig. 1, and multicast packet transmitter 312 which is identical to multicast packet transmitter 102 in the system shown in Fig. 1. The live voice sound information units, the live image information units, the delayed voice sound information units, and the delayed image information units are supplied to packet assembler 311.

Media stream reception apparatuses 330, 331 are identical in structure to media stream reception apparatuses 141 to 145 in the system shown in Fig. 1. Media stream reception apparatus 330 allows concert performances to be viewed live, and media stream reception apparatus 331 allows concert performances to be viewed with a certain time lag.

The distribution of media streams by the system will be described below.

In the media stream distribution system, when voice sounds picked up by microphone 302 and an image captured by camera 303 are input to media stream transmission apparatus 310, sound encoder 304 encodes the voice sounds into a live voice sound information unit and image encoder 305 encodes the image into a live image information unit. The live voice sound information unit and the live image information unit are supplied to packet assembler 311 and delay circuit 306. Delay circuit 306 delays the live voice sound information unit and the live image information unit by a certain time to generate a delayed voice sound information unit and a delayed image information unit, respectively, and supplies the delayed voice sound information unit and the delayed image information unit to packet assembler 311. Packet assembler 311 edits the live voice sound information unit, the live image information unit, the delayed voice sound information unit, and the delayed image information unit into the format of multicast packet 340. Multicast packet transmitter 312 multicasts multicast packet 340 over network 320. Multicast packet 340 begins with a multicast IP header and has a UDP header following the multicast IP header. After the UDP header, multicast packet 340 also has successive information units, i.e., the live voice sound information unit, the live image information unit, the delayed voice sound information unit, and the delayed image information unit arranged in the order named, each preceded by an RTP header.

Network 320 relays multicast packet 340 to media stream reception apparatuses 330, 331. Media stream reception apparatus 330 extracts only the live voice sound information unit and the live image information unit from received multicast packet 340 and reproduces them, and media stream reception apparatus 331 extracts only the delayed voice sound information unit and the delayed image information unit from received multicast packet 340 and reproduces them. Media stream reception apparatuses 330, 331 thus allow the same program to be viewed with a time difference.

In the present embodiment, it has been described that a real-time program representative of a live concert is distributed with a time difference. Similarly, a stored program such as a movie file can also be distributed with a time difference. To provide a time difference in the distribution of images from a movie file, the images may be read from the movie file with the time difference, rather than providing a delay circuit to produce the time difference.

### <<Fourth Embodiment>>

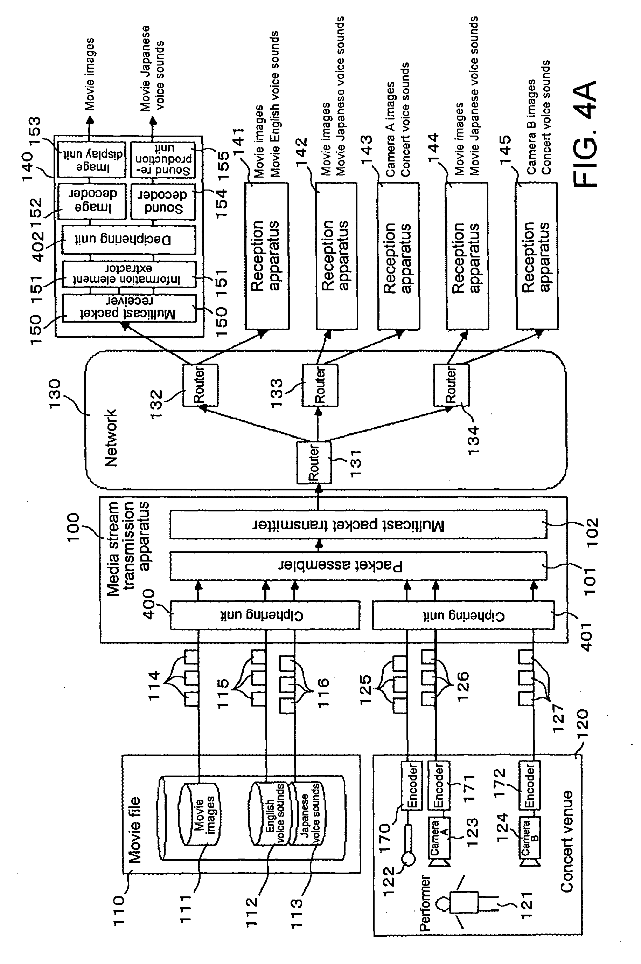

According to the present invention, information units can be ciphered and distributed. A media stream distribution system according to a third embodiment of the present invention shown in Fig. 4A has a ciphering function added to the system shown in Fig. 1, and includes ciphering units 400, 401 added to media stream transmission apparatus 100 and deciphering units 402 added to respective media stream reception apparatuses 140 to 145.

Ciphering unit 400 ciphers movie image information units 114, movie English voice sound information units 115, and movie Japanese voice sound information units 116, which are information units from movie file 100, and supplies ciphered information units to packet assembler 101. Similarly, ciphering unit 401 ciphers concert voice sound information units 125, camera A image information units 126, and camera B image information units 127, which are information units from the concert, and supplies ciphered information units to packet assembler 101. Ciphering unit 400 and ciphering unit 401 cipher information units according to different ciphering processes or using different ciphering keys according to the same ciphering process.

Deciphering unit 402 deciphers information elements extracted by information element extractor 151, and supplies deciphered image information units and sound voice information units to image decoder 152 and sound decoder 154, respectively. The information units that can be deciphered by deciphering unit 402 are limited to those which have been ciphered by preset ciphering processes and using ciphering keys. Deciphering unit 402 is unable to decipher information units which have been ciphered by other ciphering processes and information units which have been ciphered using different ciphering keys.

The distribution of media streams by the system will be described below.

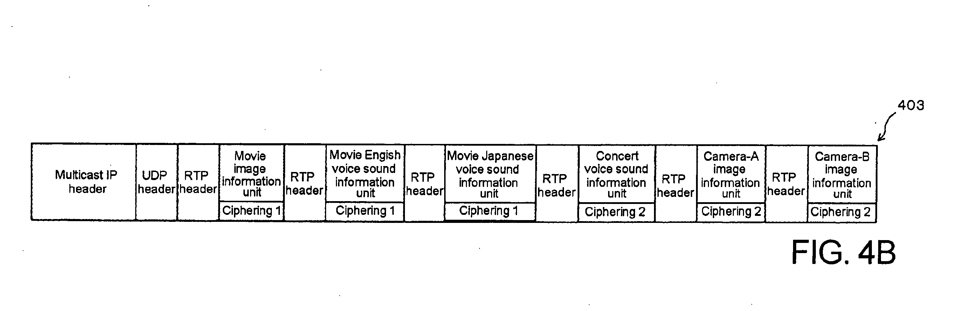

In the media stream distribution system, when movie image information units 114, movie English voice sound information units 115, and movie Japanese voice sound information units 116 are supplied from movie file 110 to media stream transmission apparatus 100, these information units are ciphered by ciphering unit 400. Likewise, concert voice sound information units 125, camera A image information units 126, and camera B image information units 127 from the concert are ciphered by ciphering unit 401. Packet assembler 101 edits ciphered information units 114 to 116, 125 to 127 into the format of multicast packet 403. Multicast packet transmitter 102 multicasts multicast packet 403 over network 130 to media stream reception apparatuses 140 to 145. Fig. 4B shows an example of the configuration of multicast packet 403. Multicast packet 403 differs from multicast packet 160 shown in Fig. 1 B in that each of the information units is ciphered.

When media stream reception apparatus 140 receives multicast packet 403, deciphering unit 402 deciphers the movie images and the movie Japanese voice sounds for reproduction. At this time, media stream reception apparatus 140 is aware of the ciphering process and the ciphering key employed in ciphering unit 400, but is unaware of the ciphering process and the ciphering key employed in ciphering unit 401. Therefore, media stream reception apparatus 140 is unable to decipher the information units of the concert that are included in multicast packet 403.

Similarly, media stream reception apparatuses 141 to 145 are aware of how to decipher programs that they are to reproduce, and hence can reproduce those programs. However, since media stream reception apparatuses 141 to 145 are unaware of how to decipher other programs, the viewing of those programs is limited on media stream reception apparatuses 141 to 145.

Consequently, if programs are charged and their rates are different depending on media streams, then different ciphering processes and ciphering keys may be employed for the respective media streams, and indicated in advance to the media stream reception apparatus, so that the media stream reception apparatus will not be able to reproduce other media streams than those which the media stream reception apparatuses have the right to reproduce. Media streams making up one program may be deciphered simply by applying the same ciphering process and ciphering key to those media streams.

If ciphering unit 400 and ciphering unit 401 cipher media information units according to respective different ciphering processes or using different ciphering keys in the same ciphering process, then it is possible to limit the viewing to particular images or sounds only in the same program by indicating how to decipher the information units or not. The viewing may also be limited to particular images or sounds only in the same program if ciphering unit 400 and ciphering unit 401 select whether each media information unit is to be ciphered or not.

### <<Fifth Embodiment>>

In a media stream distribution system according to the present invention, parameters may need to be matched between a media stream transmission apparatus and a media stream reception apparatus for the distribution media streams. A media stream distribution system which is capable of determining various parameters that need to be matched between a transmission apparatus and a reception apparatus will be described below.

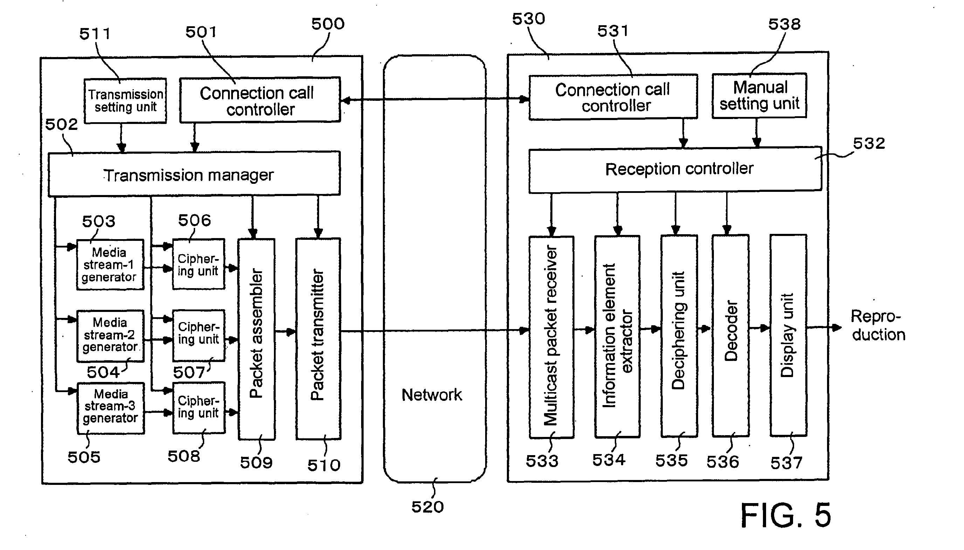

A media stream distribution system according to a fifth embodiment of the present invention shown in Fig. 5 comprises media stream transmission apparatus 500 and media stream reception apparatus 530 which are interconnected by network 520 which is identical to network 130 shown in Fig. 1. Though only one media stream reception apparatus 530 is shown, the media stream distribution system may have a plurality of media stream reception apparatus 530 as with each of the above embodiments.

Media stream transmission apparatus 500 comprises connection call controller 501, transmission manager 502, media stream-1 generator 503 for generating a first media stream, media stream-2 generator 504 for generating a second media stream, media stream-3 generator 505 for generating a third media stream, ciphering units 506, 507, 508 for ciphering information units of the first to third media streams, respectively, packet assembler 509, and packet transmitter 510.

Connection call controller 501 has a function to indicate at least one of a multicast address which performs transmission to reception apparatus 530, the type of the medium of a media stream, encoding information, ciphering setting information, and the data length of an information unit, over network 520 to reception apparatus 530 when reception starts.

Packet assembler 509 has a function which is identical to the function of packet assembler 101 in the system shown in Fig. 1. Packet assembler 509 may also have a function to add, to a packet, at least one of information identifying a program to which an information unit belongs, the type of the medium of a media stream to which an information unit belongs, encoding information of a media stream to which an information unit belongs, and a delimiter marker indicating the boundary between two adjacent information units, with respect to one or plural information units contained in the packet.

Packet transmitter 510 has a function which is identical to the function of packet transmitter 102 in the system shown in Fig. 1. Packet transmitter 510 also has a function to construct a packet based on predetermined information as to at least one of a multicast address used for transmission, the type of the medium of a media stream, encoding information, ciphering setting information, and the data length of an information unit.

Transmission setting unit 511 serves to determine and set in advance in transmission apparatus 500, at least one of a multicast address used for transmission, the type of the medium of a media stream, encoding information, ciphering setting information, and the data length of an information unit.

Media stream reception apparatus 530 comprises connection call controller 531, reception manager 532, multicast packet receiver 533 for receiving a packet delivered by multicasting, information element extractor 534 for extracting one or plural information elements from a packet received by multicast packet receiver 533, deciphering unit 535 for deciphering the extracted information unit or units, decoder 536 for decoding the deciphered information unit or units, display unit 537 for displaying an image based on the decoded information unit or units, and manual setting unit 538.

Connection call controller 531 is connected to connection call controller 501 of transmission apparatus 300 through network 520. Connection call controller 531 has a function to receive information indicated by connection call controller 501 of transmission apparatus 300 with respect to at least one of a multicast address used for reception, the type of the medium of a media stream, encoding information, ciphering setting information, and the data length of an information unit.

Multicast packet receiver 533 is identical to multicast packet receiver 150 in the system shown in Fig. 1. Multicast packet receiver 533 may additionally have a function to receive at least one information of: information identifying a program to which an information unit belongs, the type of the medium of a media stream to which an information unit belongs, and encoding information of a media stream to which an information unit belongs, contained in the packet.

Manual setting unit 538 serves to determine and set in advance in reception apparatus 530 at least one of a multicast address used for reception, the type of the medium of a media stream, encoding information, ciphering setting information, and the data length of an information unit.

The distribution of media streams by the system will be described below.

In media stream reception apparatus 500, transmission setting unit 511 determines in advance a multicast address to be used for distribution, the configuration of a multicast packet, and ciphering information for each media stream, and controls transmission manager 502 to set those information in media stream-1 generator 503, media stream-2 generator 504, media stream-3 generator 505, ciphering units 506, 507, 508, packet assembler 509, and packet transmitter 510.

When the viewing of a media stream starts, media stream reception apparatus 530 controls connection call controller 531 to request connection call controller 501 of media stream transmission apparatus 500 for the reception of a media stream. In response to the request, connection call controller 501 of media stream transmission apparatus 500 indicates the multicast address to be used for distribution, the configuration information of the multicast packet, and the ciphering information for the media stream to be viewed, to connection call controller 531 of media stream reception apparatus 530.

Based on the information indicated by connection call controller 501 of media stream reception apparatus 500, connection call controller 531 of media stream reception apparatus 530 controls reception manager 532 to set the multicast address to be used for distribution in multicast packet receiver 533, set the configuration information of the multicast packet in information element extractor 534, and set the ciphering information in deciphering unit 535. Media stream reception apparatus 530 is now read y for receiving the distribution.

Thereafter, the media stream is distributed and viewed in the same manner as with the embodiments described above.

A process of determining various parameters such as the configuration of a multicast packet, which need to be matched between the media stream transmission apparatus and the media stream reception apparatus, may be:
(a) a process of obtaining the parameters through communications between media stream transmission apparatus 500 and media stream reception apparatus 530 shown in Fig. 5;
(b) a process of notifying the recipient of parameters with a program guide on a paper medium, a program guide available through the Web, or a mail message, and allowing the recipient to determine parameters manually in advance;
(c) a process of performing unicast communications between the transmission apparatus and the reception apparatus before a media stream starts being received, and determining parameters through negotiations if necessary;
(d) a process of setting information necessary for the reception apparatus in a multicast packet and using the information for reproduction in the reception apparatus; or
(e) a process which is a combination of any of the above methods (a) through (d).

One of the above processes may be selected depending on the nature of the distribution service. In the process (b), predetermined settings are made using manual setting unit 538 of media stream reception apparatus 530.

In the present embodiment, packet assembler 509 of the media stream transmission apparatus may add, to a packet, at least one information of: information identifying a program to which an information unit belongs, the type of the medium of a media stream to which an information unit belongs, encoding information of a media stream to which an information unit belongs, and a delimiter marker indicating the boundary between two adjacent information units, with respect to one or plural information units contained in the packet. If such information is added to the packet, then the packet containing the information is received by multicast packet receiver 533, and the media stream is reproduced based on the received information in media stream reception apparatus 530.

In the present embodiment, reception manager 532 may select a medium to be reproduced depending on a selection made by the recipient or the capability of media stream reception apparatus 530 based on at least one information of: the multicast address used for transmission, the type of the medium of the media stream, the encoding information, the ciphering setting information and the like which have been indicated from the transmission apparatus.

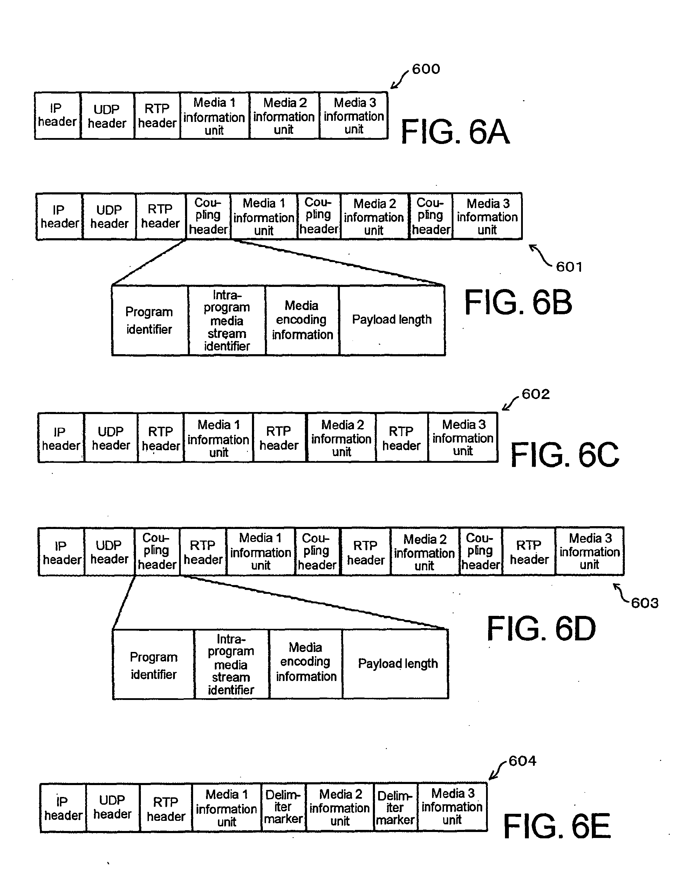

Figs. 6A to 6E show the formats of multicast packets used in the present embodiment by way of example. Each of formats 600 to 604 has an IP header at its leading end followed by a UDP header.

According to format 600 shown in Fig. 6A, the UDP header is followed by one RTP header which is in turn followed by three successive media information units. The three media information units can be used if they belong to the same medium and are subject to the same encoding rule, and media information unit lengths can be fixedly determined or the information units can be separated according to the provision of the encoding rule. An example of the cases in which information units can be separated is a case in which a resynchronizing marker according to the MPEG-4 encoding process is used. In the event that there is no data to be transmitted in the timing of the packet, fill data corresponding to stuffing data according to the MPEG-4 encoding process, for example, is set in the area if the media information unit lengths are fixed, and only a resynchronizing marker is set in the area if the information units are separated according to the provision of the encoding rule.

For the reception apparatus to extract a desired media stream, it is necessary to recognize in advance, which contents are to be sent to which information units according to either one of the processes (a) through (c) or a combination of those processes, or to review and extract contents.

If format 600 is employed, then the overhead due to headers is minimized. Format 600 is suitable for browsing images captured by a plurality of stationary cameras with a number of media stream reception apparatus.

According to format 601 shown in Fig. 6B, the UDP header is followed by one RTP header which is in turn followed by three successive media information units each preceded by a coupling header. The coupling header comprises a program identifier for identifying a program, an intra-program media stream identifier, media encoding information, and a payload length.

The program identifier represents information for identifying a program to which the media information unit belongs. The intra-program media stream identifier is an identifier indicative of whether the corresponding information unit is a media information unit which is a component of a plurality of media streams making up a program. The media encoding information is information indicative of the medium, encoding process and the like of the media information unit. This information may overlap, contradict, or complement payload type information stored in the RTP header. If the information contradicts the payload type information, then the media encoding information is preferentially received. The payload length represents the length of contents managed by the coupling header, and comprises the byte length of media information units.

The three media information units may belong to different media and have different encoding rules, and have payload lengths which may not be fixed lengths, but may be different from each other. In the event that there is no data to be transmitted in the timing of the packet, fill data corresponding to stuffing data according to the MPEG-4 encoding process is set in the area, or only a coupling header is set in the area.

If format 601 is employed, then the reception apparatus may be aware of the correspondence between program identifiers and intra-program media stream identifiers, and contents in advance, and may be able to extract a desired media stream based on the program identifiers and the intra-program media stream identifiers in the multicast packet.

According to format 602 shown in Fig. 6C, RTP headers are assigned respectively to three media information units. The lengths of the three media information units and the payloads must be fixed lengths which are either predetermined or indicated from the transmission apparatus. Three media streams may have different frame rates. In the event that there is no data to be transmitted in the timing of the packet, fill data corresponding to stuffing data according to the MPEG-4 encoding process is set in the area.

With format 602, the reception apparatus can grasp which contents are to be sent to which information units according to either one of the processes (a) through (c) or a combination of those processes and extract a desired media stream, or can judge contents of information units according to payload types contained in the RTP headers or SSRC (Synchronization Source identifier) or CSRC (Contributing Source identifier) and extract a media stream.

According to format 603 shown in Fig. 6D, coupling headers and RTP headers are assigned to three media information units, respectively. The three media information units may be any information units. With format 603, the reception apparatus can grasp which contents are to be sent to which information units according to either one of the processes (a) through (c) or a combination of those processes and extract a desired media stream. Alternatively, the reception apparatus may be aware of the correspondence between program identifiers and intra-program media stream identifiers, and contents in advance, and may be able to extract a desired media stream based on the program identifiers and the intra-program media stream identifiers in the multicast packet.

Format 604 shown in Fig. 6E is a format which employs a bit or a bit string that does not appear in media information elements 1, 2, 3 as a delimiter marker. Unlike format 600 shown in Fig. 6A, each of the media information units may not be of a fixed length, but may be of any length. A desired media stream is extracted in the same manner with format 602.

A process of lumping a plurality of information units into one packet is not limited to the above process, but may be any of various processes insofar as the transmission apparatus and the reception apparatus employ the same process of constructing a packet. A suitable process of constructing a packet may be selected depending on the form of services. According to the present embodiment, packet assembler 509 assembles a packet of the above packet format, and information element extractor 534 interprets the packet and extracts necessary information elements therefrom.

### <<Sixth Embodiment>>

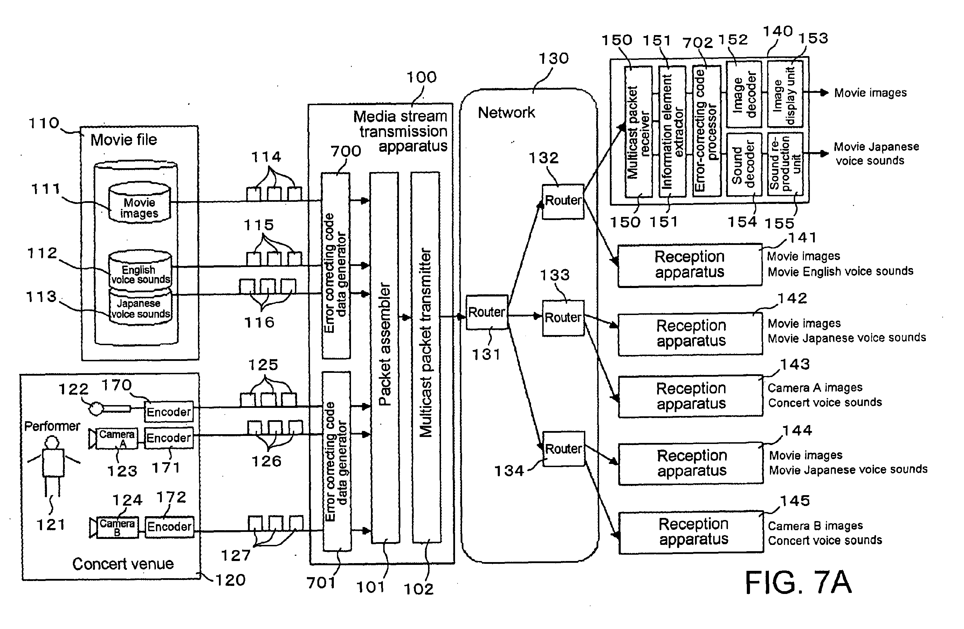

According to the present invention, information units may be encoded for error correction and then distributed. A media stream distribution system according to a sixth embodiment of the present invention shown in Fig. 7A has an error-correcting function added to the system shown in Fig. 1, and includes error-correcting code data generators 700, 701 added to media stream transmission apparatus 100 and error-correcting code data processors 702 added to respective media stream reception apparatuses 140 to 145. According to the present embodiment, a plurality of information units include at least one of an error-correcting information unit generated from at least one media stream and a plurality of error-correcting code information units, which are different from each other, generated from the same media stream according to a plurality of different processes.

Error-correcting code data generator 700 generates error-correcting code data (movie image error-correcting information units) from movie image information units 114 from movie file 110, and error-correcting code data generator 701 generates error-correcting code data (camera A image error-correcting information units and camera B image error-correcting information units) from camera A image information units 126 and camera B image information units 127 from concert venue 120. These error-correcting code data, together with movie image information units 114, movie English voice sound information units 115, movie Japanese voice sound information units 116, concert voice sound information units 125, camera A image information units 126, and camera B image information units 127, are assembled into one packet by packet assembler 101. The packet is then transmitted as multicast packet 703 from multicast packet transmitter 102 over network 130 to media stream reception apparatuses 140 to 145.

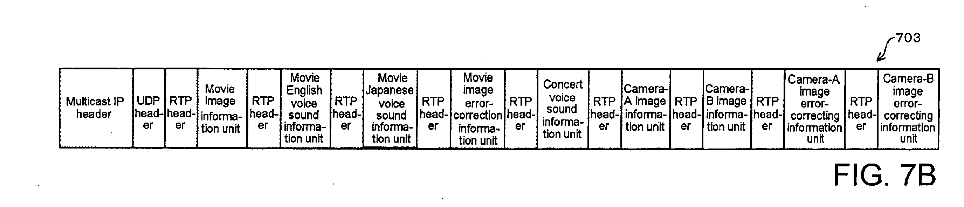

As shown in Fig. 7B, multicast packet 703 includes a movie image error-correcting information unit, a camera A image error-correcting information unit, and a camera B image error-correcting information unit which are added to multicast packet 160 shown in Fig. 1 B. The error-correcting information units are preceded by respective RTP headers.

In the present embodiment, error-correcting code data generators 700, 701 may employ mutually different error-correction encoding processes or may employ the same error-correction encoding process. The error-correction encoding processes may employ existing techniques generally referred to as FEC (Forward Error Correction), such as the Reed Solomon code, LDP (Low Density Parity check) code, etc.

For the sake of brevity, error-correcting code data are generated with respect to only movie image information units 114, camera A image information units 126, and camera B image information units 127 in the embodiment. However, the generation of error-correcting code data is not limited to the above information units.

Error-correcting code data processor 702 is provided between information element extractor 151 and decoders 152, 154 in each of media stream reception apparatuses 140 to 145, and performs an error-correcting code process based on error-correcting information units extracted by information element extractor 151. As a result, if multicast packet 703 received by each of media stream reception apparatuses 140 to 145 suffers a data error or loss, then each of media stream reception apparatuses 140 to 145 recovers information units contained in the packet based on other information units and error-correcting code data of the medium to be reproduced, and error-correction encoding information which has been obtained in advance.

According to the present embodiment, error-correcting code data generators 700, 701 can intensify the error and loss resistance of the transmission path with respect to certain media information data only by selecting the generation of error-correcting code data for each media information unit, thereby intensifying the error resistance depending on the band that can be used.

In the present embodiment, error-correcting code data are generated from media information units. The generation of error-correcting code data may be used in combination with the ciphering process according to the fourth embodiment. In this case, error-correcting code data are generated from media information units which have been ciphered. If a packet received by each reception apparatus suffers an error or loss, then the reception apparatus recovers media information units based on the error-correcting code, and thereafter deciphers the media information units to reproduce them.

According to the present embodiment, a packet including error-correcting code data is transmitted to perform a packet distribution which is resistant to data errors and losses in the transmission path. The load on the network which would otherwise be posed by a retransmission request is reduced.

### <<Seventh Embodiment>>

In a media stream distribution system according to the present invention, parameters may need to be matched between a media stream transmission apparatus and a media stream reception apparatus for the distribution media streams even if an error-correcting code is used. A media stream distribution system which is capable of determining various parameters that need to be matched between a transmission apparatus and a reception apparatus will be described below.

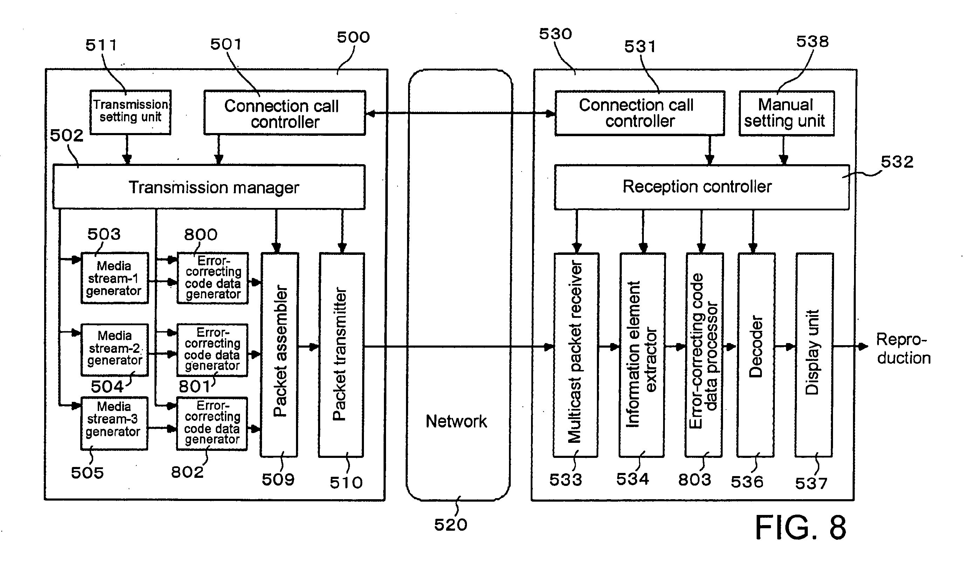

A media stream distribution system according to a seventh embodiment of the present invention shown in Fig. 8 has error-correcting code data generators 800 to 802 which replace ciphering units 506 to 508 in the media stream distribution system according to the sixth embodiment shown in Fig. 5 and also has error-correcting code data processor 803 which replaces deciphering unit 535 in the media stream distribution system according to the sixth embodiment shown in Fig. 5. It is of course possible for the media stream distribution system to have a error-correcting encoding processing function while maintaining a ciphering and deciphering function.

Error-correcting code data generators 800 to 802 generate error-correcting code data with respect to respective information units of first to third media streams. Error-correcting code data processor 803 performs an error-correcting code process based on error-correcting information units extracted by information element extractor 534.

In the present embodiment, connection call controller 501 has a function to indicate at least one of: a multicast address used for transmission to reception apparatus 530, the type of the medium of a media stream, the data length of a media stream, encoding information, error-correction encoding information, the data length of an information unit, and the data length of error-correcting code data, over network 520 to reception apparatus 530 when reception starts. If the reception apparatus has a ciphering function, then connection call controller 501 may transmit ciphering information to reception apparatus 530 when reception starts. Packet assembler 509 has a function which is identical to the function of packet assembler 101 in the system shown in Fig. 1. Packet assembler 509 may also have a function to add, to a packet, at least one of: information identifying a program to which an information unit belongs, the type of the medium of a media stream to which an information unit belongs, encoding information of a media stream to which an information unit belongs, and a delimiter marker indicating the boundary between two adjacent information units, with respect to one or plural information units contained in the packet.

Packet transmitter 510 has a function which is identical to the function of packet transmitter 102 in the system shown in Fig. 1. Packet transmitter 510 also has a function to construct a packet based on predetermined information as to at least one of: a multicast address used for transmission, the type of the medium of a media stream, encoding information, error-correction encoding information, the data length of an information unit, and ciphering setting information.

Transmission setting unit 511 serves to determine and set in advance in transmission apparatus 500, at least one of: a multicast address used for transmission, the type of the medium of a media stream, encoding information, error-correction encoding information, the data length of an information unit, and ciphering setting information.

Connection call controller 531 is connected to connection call controller 501 of transmission apparatus 300 through network 520. Connection call controller 531 has a function to receive information indicated by connection call controller 501 of transmission apparatus 300 with respect to at least one of: a multicast address used for reception, the type of the medium of a media stream, encoding information, setting information of an error-correcting code, the data length of an information unit, ciphering setting information, the data length of a media stream, and another data length of error-correcting code data.

Multicast packet receiver 533 is identical to multicast packet receiver 150 in the system shown in Fig. 1. Multicast packet receiver 533 may additionally have a function to receive at least one information of: information identifying a program to which an information unit belongs, the type of the medium of a media stream to which an information unit belongs, and encoding information of a media stream to which an information unit belongs, contained in the packet.

Manual setting unit 538 serves to determine and set in advance in reception apparatus 530, at least one of: a multicast address used for transmission, the type of the medium of a media stream, encoding information, setting information of an error-correcting code, the data length of an information unit, the data length of a media stream, and another data length of error-correcting code data. If the distribution system has a ciphering function, then manual setting unit 538 may determine and set ciphering setting information.

The distribution of media streams by the system will be described below.

In media stream reception apparatus 500, transmission setting unit 511 determines a multicast address to be used for distribution, the configuration of a multicast packet, and error-correction encoding information for each media stream, and controls transmission manager 502 to set those information in media stream-1 generator 503, media stream-2 generator 504, media stream-3 generator 505, error-correcting code data generators 800, 801, 802, packet assembler 509, and multicast packet transmitter 510.

When the viewing of a media stream starts, media stream reception apparatus 530 controls connection call controller 531 to request connection call controller 501 of media stream transmission apparatus 500 for the reception of a media stream. In response to the request, connection call controller 501 of media stream transmission apparatus 500 indicates the multicast address to be used for distribution, the configuration information of the multicast packet, and the error-correction encoding information for the media stream to be viewed, to connection call controller 531 of media stream reception apparatus 530.

Based on the information indicated by connection call controller 501 of transmission apparatus 500, connection call controller 531 of media stream reception apparatus 530 controls reception manager 532 to set the multicast address to be used for distribution in multicast packet receiver 533, set the configuration information of the multicast packet in information element extractor 534, and set the error-correction encoding information in error-correcting code data processor 803. Media stream reception apparatus 530 is now readied for receiving the distribution.

Thereafter, the media stream is distributed and viewed in the same manner as with the embodiments described above.

A process of determining various parameters such as the configuration of a multicast packet, which need to be matched between the media stream transmission apparatus and the media stream reception apparatus, may be the same as the process in the fifth embodiment.

In the present embodiment, packet assembler 509 of the media stream transmission apparatus may add, to a packet, at least one information of: information identifying a program to which an information unit belongs, the type of the medium of a media stream to which an information unit belongs, encoding information of a media stream to which an information unit belongs, and a delimiter marker indicating the boundary between two adjacent information units, with respect to one or plural information units contained in the packet. If such information is added to the packet, then the packet containing the information is received by multicast packet receiver 533, and the media stream is reproduced based on the received information in media stream reception apparatus 530.

In the present embodiment, reception manager 532 may select a medium to be reproduced depending on a selection made by the recipient or the capability of media stream reception apparatus 530 based on at least one information of: the multicast address used for transmission, the type of the medium of the media stream, the encoding information, the ciphering setting information, and the like which have been indicated from the transmission apparatus. Reception manager 532 may select the best error-correction information unit from the extracted error-correction information depending in the state of error or loss in the received information units.

In the media stream distribution system described above, each of the media stream transmission apparatus and the media stream reception apparatus may be implemented by a computer. Specifically, the processing and control in the media stream transmission apparatus and the media stream reception apparatus described above may be realized when the computer executes the program. The computer referred to includes a processor and a controller. The program is read into the computer through a network or from a recording medium such as a CD-ROM which stores the program. The present invention covers such a product, a program product, or a recording medium. A medium for transmitting such a program also falls in the scope of the present invention.

## Claims

1. A media stream transmission method for transmitting a plurality of media streams, comprising the steps of:
coupling a plurality of information units for transmitting the respective media streams into a single packet; and
multicasting said packet.

2. The method according to claim 1, wherein said plurality of information units comprise at least one of the information units included in the group consisting of:
(a) a plurality of information units which are different from each other that serve as components of different media streams making up a single program;
(b) a plurality of information units which are different from each other that serve as components of different media streams making up different programs;
(c) a plurality of information units which are different from each other that serve as components of media streams of different medium types;
(d) a plurality of information units which are different from each other that represent the same contents which are encoded by respective different encoding processes;
(e) a plurality of information units which are different from each other that represent the same contents which are encoded at a plurality of different compression ratios by the same encoding process;
(f) a plurality of information units which are different from each other that are distributed with a time difference;
(g) a plurality of information units which are different from each other that are ciphered differently; and
(h) a plurality of information units which are different from each other that represent different contents which are ciphered identically.

3. The method according to claim 1 or 2, wherein said plurality of information units include at least one information unit included in the group consisting of:
an error-correcting information unit generated from at least one media stream; and
a plurality of mutually different error-correcting information units generated from the same media stream according to a plurality of different processes.

4. The method according to any one of claims 1 to 3, further comprising the step of adding, to said packet, at least one information included in the group consisting of:
(i) information identifying a program to which an information unit belongs;
(ii) type of a medium of a media stream to which an information unit belongs;
(iii) encoding information of a media stream to which an information unit belongs; and
(iv) a delimiter marker indicating a boundary between two adjacent information units.

5. The method according to any one of claims 1 to 4, further comprising the step of determining in advance at least one of:
- a multicast address used for transmission;
- type of a medium of a media stream;
- encoding information;
- ciphering setting information;
- data length of an information unit;
- error-correction encoding information; and
- data length of at least one of a media stream and error-correcting code data.

6. The method according to any one of claims 1 to 5, further comprising the step of, when reception starts, indicating, to a receiving side, at least one of:
- a multicast address used for transmission;
- type of a medium of a media stream;
- encoding information;
- ciphering setting information;
- data length of an information unit;
- error-correction encoding information; and
- data length of at least one of a media stream and error-correcting code data.

7. The method according to claim 1 or 2, further comprising the step of encoding a media input differently to generate a plurality of information elements.

8. The method according to claim 1 or 2, further comprising the step of delaying a media input or an information unit by a given time to generate information units with a time difference therebetween.

9. The method according to claim 1 or 2, further comprising the step of ciphering an information unit differently to generate different information units.

10. The method according to claim 1 or 2, further comprising the step of ciphering a plurality of information units identically.

11. A media stream reception method for receiving a media stream, comprising the steps of:
receiving a packet which has been delivered by multicasting;
extracting one or plural information elements to be reproduced from the received packet; and
reproducing the extracted information element or elements.

12. The method according to claim 11, further comprising the step of recovering and reproducing said information element or elements when said information element or elements have been ciphered.

13. The method according to claim 11 or 12, further comprising the steps of:
extracting at least one error-correcting information unit from the received packet; and
recovering an information unit which is received using the extracted error-correcting information unit if the received information unit suffers an error or loss.

14. The method according to claim 13, further comprising the step of selecting an optimum error-correcting information unit from extracted error-correcting information based on the state of the error or loss of the received information unit.

15. The method according to any one of claims 11 to 14, further comprising the steps of:
receiving at least one information of:
(i) information identifying a program to which an information unit belongs;
(ii) type of the medium of a media stream to which an information unit belongs; and
(iii) encoding information of a media stream to which an information unit belongs; and
performing reproduction based on the received information.

16. The method according to any one of claims 11 to 15, further comprising the step of determining in advance at least one of:
- a multicast address used for transmission;
- type of the medium of a media stream;
- encoding information;
- ciphering setting information;
- data length of an information unit;
- error-correction encoding information; and
- data length of at least one of a media stream and error-correcting code data.

17. The method according to any one of claims 11 to 16, further comprising the step of receiving information, which is indicated from a transmitting side, relating to at least one of:
- a multicast address used for transmission;
- type of the medium of a media stream;
- encoding information;
- ciphering setting information;
- data length of an information unit;
- error-correction encoding information; and
- data length of at least one of a media stream and error-correcting code data.

18. The method according to claim 17, further comprising the step of selecting a medium to be reproduced depending on a selection made by the user, based on said information indicated from said transmitting side.

19. A media stream transmission apparatus for transmitting a plurality of media streams, comprising:
means for coupling a plurality of information units for transmitting the respective media streams into a single packet; and
means for multicasting said packet.

20. The apparatus according to claim 19, wherein said plurality of information units comprise at least one of information units included in the group consisting of:
(a) a plurality of information units which are different from each other that serve as components of different media streams making up a single program;
(b) a plurality of information units which are different from each other that serve as components of different media streams making up different programs;
(c) a plurality of information units which are different from each other that serve as components of media streams of different medium types;
(d) a plurality of information units which are different from each other that represent the same contents which are encoded by respective different encoding processes;
(e) a plurality of information units which are different from each other that represent the same contents which are encoded at a plurality of different compression ratios by the same encoding process;
(f) a plurality of information units which are different from each other that are distributed with a time difference;
(g) a plurality of information units which are different from each other that are ciphered differently; and
(h) a plurality of information units which are different from each other that represent different contents which are ciphered identically.

21. The apparatus according to claim 19 or 20, wherein said plurality of information units include at least one information unit included in the group consisting of:
an error-correcting information unit generated from at least one media stream; and
a plurality of mutually different error-correcting information units generated from the same media stream according to a plurality of different processes.

22. The apparatus according to any one of claims 19 to 21, further comprising means for encoding a media input differently to generate a plurality of information elements.

23. The apparatus according to any one of claims 19 to 21, further comprising means for delaying a media input or an information unit by a given time to generate information units with a time difference therebetween.

24. The apparatus according to any one of claims 19 to 21, further comprising means for ciphering an information unit differently to generate different information units.

25. The apparatus according to any one of claims 19 to 21, further comprising means for ciphering a plurality of information units identically.

26. The apparatus according to any one of claims 19 to 25, further comprising means for adding, to said packet, at least one of:
(i) information identifying a program to which an information unit belongs;
(ii) type of the medium of a media stream to which an information unit belongs;
(iii) encoding information of a media stream to which an information unit belongs; and
(iv) a delimiter marker indicating the boundary between two adjacent information units.

27. The apparatus according to any one of claims 19 to 26, further comprising means for constructing a packet based on predetermined information with respect to at least one of:
- a multicast address used for transmission;
- type of the medium of a media stream;
- encoding information;
- ciphering setting information;
- data length of an information unit;
- error-correction encoding information; and
- data length of at least one of a media stream and error-correcting code data.

28. The apparatus according to any one of claims 19 to 27, further comprising means for indicating, to a receiving side when reception starts, at least one of:
- a multicast address used for transmission;
- type of the medium of a media stream;
- encoding information;
- ciphering setting information;
- error-correction encoding information; and
- data length of at least one of a media stream and error-correcting code data.

29. A media stream reception apparatus for receiving a media stream, comprising:
means for receiving a packet which has been delivered by multicasting;
means for extracting one or plural information elements to be reproduced from the received packet; and
means for reproducing the extracted information element or elements.

30. The apparatus according to claim 29, further comprising means for decoding said information element or elements when said information element or elements have been ciphered.

31. The apparatus according to claim 29 or 30, further comprising:
means for extracting at least one error-correcting information unit from the received packet; and
means for recovering an information unit which is received using the extracted error-correcting information unit if the received information unit suffers an error or loss.

32. The apparatus according to claim 31, further comprising means for selecting an optimum error-correcting information unit from extracted error-correcting information based on the state of the error or loss of the received information unit.

33. The apparatus according to any one of claims 29 to 32, further comprising:
means for receiving at least one information of:
(i) information identifying a program to which an information unit belongs;
(ii) type of a medium of a media stream to which an information unit belongs; and
(iii) encoding information of a media stream to which an information unit belongs; and
means for performing reproduction based on the received information.

34. The apparatus according to any one of claims 29 to 33, further comprising means for determining in advance at least one of:
- a multicast address used for transmission;
- type of the medium of a media stream;
- encoding information;
- ciphering setting information;
- data length of an information unit;
- error-correction encoding information; and
- data length of at least one of a media stream and error-correcting code data.

35. The apparatus according to any one of claims 29 to 34, further comprising means for receiving information; which is indicated from a transmitting side, with respect to at least one of:
- a multicast address used for reception;
- type of the medium of a media stream;
- encoding information;
- ciphering setting information;
- data length of an information unit;
- error-correction encoding information; and
- data length of at least one of a media stream and error-correcting code data.

36. The apparatus according to claim 34, further comprising means for selecting a medium to be reproduced depending on a selection made by the recipient or the capability of said media stream reception apparatus, based on said information indicated from said transmitting side.

37. A media stream distributing method comprising the steps of:
transmitting a multicast packet by the media stream transmission method according to any one of claims 1 to 10;
distributing said multicast packet over a network having a multicasting function; and
receiving the multicast packet by a media stream reception method according to any one of claims 11 to 18.

38. A media stream distribution system comprising:
a media stream transmission apparatus according to any one of claims 19 to 28;
a media stream reception apparatus according to any one of claims 29 to 35; and
a network comprising at least one multicast-capable router.

39. A program for enabling a computer to function as a media stream transmission apparatus according to any one of claims 19 to 28.

40. A program for enabling a computer to function as a media stream reception apparatus according to any one of claims 29 to 35.

41. A computer-readable recording medium storing a program according to claim 39.

42. A computer-readable recording medium storing a program according to claim 40.
